Europäisches Patentamt

European Patent Office

Office européen des brevets

(19)

(11) Veröffentlichungsnummer: **0 267 376**
**B1**

(12) **EUROPÄISCHE PATENTSCHRIFT**

(45) Veröffentlichungstag der Patentschrift:
24.01.90

(21) Anmeldenummer: 87111524.2

(22) Anmeldetag: 10.08.87

(51) Int. Cl.⁴: **B05D 7/04**, C08J 7/04, B60J 7/12

(54) Flexible Sichtscheibe aus Kunststoff und Verfahren zur Optimierung der Kratzfestigkeit einer solchen Sichtscheibe.

(30) Priorität: 24.10.86 DE 3636264

(43) Veröffentlichungstag der Anmeldung:
18.05.88 Patentblatt 88/20

(45) Bekanntmachung des Hinweises auf die Patenterteilung:
24.01.90 Patentblatt 90/4

(84) Benannte Vertragsstaaten:
AT CH DE FR GB IT LI NL

(56) Entgegenhaltungen:
EP-A- 0 085 006
DE-A- 3 112 704
US-A- 4 332 861

(73) Patentinhaber: Dr.Ing.h.c. F. Porsche Aktiengesellschaft, Porschestrasse 42, D-7000 Stuttgart 40(DE)

(72) Erfinder: Wolf, Uwe, Dipl.-Ing. FH, Schleifweg 10, D-8771 Esselbach(DE)
Erfinder: Heck, Wolfgang, Dipl.-Ing. FH, Schoenblickstrasse 34, D-7253 Renningen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine flexible Sichtscheibe aus Kunststoff, insbesondere auf eine zusammenfaltbare Heckscheibe für ein Verdeck eines Personenwagens, die aus einer Folie aus transparentem Weich-PVC besteht sowie auf ein Verfahren zur Optimierung der Kratzfestigkeit einer solchen Scheibe. Eine solche Sichtscheibe und ein solches Verfahren sind in der EP-A2 0 085 006 beschrieben.

An derartige Sichtscheiben werden verschiedenartige Anforderungen gestellt. Einerseits müssen die Scheiben gute optische Eigenschaften aufweisen, um eine verzerrungsfreie Durchsicht zu gewährleisten, und hinreichend steif sein, damit sie sich in gespanntem Zustand, d. h., bei geschlossenem Verdeck, in eine möglichst wellenfreie Form legen. Andererseits muß eine solche Sichtscheibe hinreichend flexibel sein, damit sie den Faltvorgang mitmachen kann, ohne jedoch dabei zu knicken. Die Kunststoffscheibe muß ferner eine gute Kratzfestigkeit aufweisen, damit eine störungsfreie Durchsicht gewährleistet ist. Die geforderten Eigenschaften sollen schließlich über einen langen Zeitraum sowie bei hohen und tiefen Temperaturen erhalten bleiben.

In der Praxis hat sich gezeigt, daß die geforderten optischen Eigenschaften und die Flexibilität nur mit einer flexiblen Sichtscheibe erfüllt werden können, die aus einer transparenten PVC-P-Folie gefertigt ist. Derartige Sichtscheiben weisen einen Weichmacheranteil von ca. 30 % auf. Durch den hohen Weichmacheranteil, der notwendig ist, um die Scheibe elastisch, also knick- und faltbar zu machen, ergibt sich eine weiche und somit auch kratzempfindliche Heckscheibenoberfläche.

Aufgabe der Erfindung ist es, an einer flexiblen Sichtscheibe aus Kunststoff solche Vorkehrungen zu treffen, daß die Sichtscheibe unter Beibehaltung der guten Verformbarkeit sowie der optischen Eigenschaften widerstandsfähiger gegen kratzerartige und scheuernde Belastungen ist.

Erfindungsgemäß wird diese Aufgabe durch die kennzeichnenden Merkmale des Anspruchs 1 gelöst. Das erfindungsgemäße Verfahren zur Optimierung der Kratzfestigkeit einer flexiblen Sichtscheibe ist im Anspruch 10 definiert. Weitere, die Erfindung in vorteilhafter Weise ausgestaltende Merkmale enthalten die Unteransprüche.

Die mit der Erfindung hauptsächlich erzielten Vorteile sind darin zu sehen, daß die Sichtscheibe durch die zumindest einseitige Aufbringung einer Deckschicht aus einem elastisch eingestelltem 2K-Klarlack auf Basis von PUR-Acrylat oder Polyester-Acryl eine wesentlich verbesserte Kratzfestigkeit aufweist, wobei die Verformbarkeit und die optischen Eigenschaften bisher verwendeter flexibler Sichtscheiben erhalten bleiben. Insbesondere bei flexiblen Sichtscheiben, die als Weichmacher Di-2-ethylhexyphtalat oder eine Mischung aus Di-2-ethylhexyphthalat und Alkyl-Sulfonsäure-Phenyl-Ester oder anderen Weichmachern aufweisen, wird einerseits eine gute Haftung der Deckschicht und andererseits eine wesentliche Verbesserung der Kratzfestigkeit durch den 2K-Klarlack erzielt. Die Kratzfestigkeit wird um so größer, je elastischer der 2K-Klarlack eingestellt ist.

Einige Ausführungsformen der Erfindung werden anhand der Figuren und einer Tabelle im folgenden näher beschrieben. Von den Figuren zeigen:

Fig. 1 eine Teilseitenansicht eines Personenwagens mit einem Faltverdeck,
Fig. 2 einen Schnitt nach der Linie II-II in größerem Maßstab, wobei die erfindungsgemäße Deckschicht nur auf einer Seite der Sichtscheibe vorgesehen ist,
Fig. 3 einen Schnitt entsprechend Fig. 2, jedoch mit einer beidseitig aufgetragenen Deckschicht.

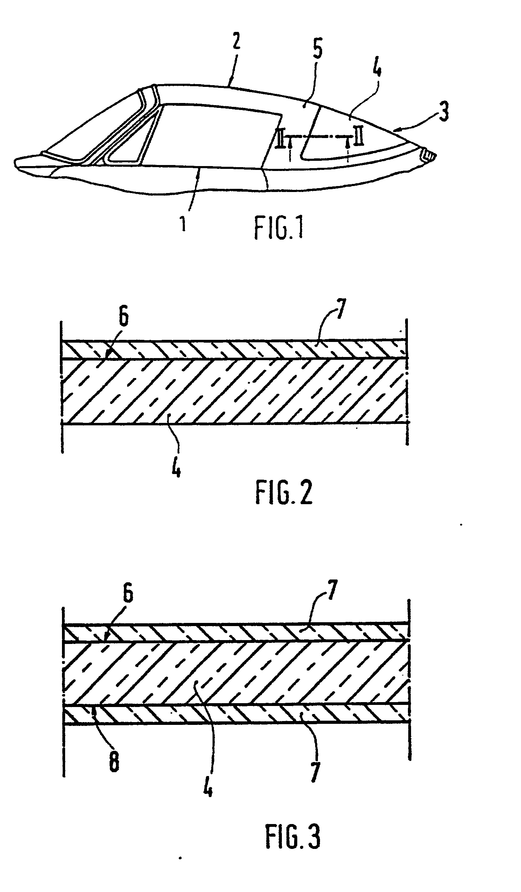

In Fig. 1 ist ein Personenwagen 1 mit einem Cabrio-Verdeck 2 dargestellt, der in einem hinteren Bereich 3 mit einer flexiblen Sichtscheibe 4 aus Kunststoff versehen ist. Die flexible Sichtscheibe 4 wird entsprechend Fig. 1 durch eine faltbare Heckscheibe gebildet, die in ihrem Randbereich mit dem angrenzenden Verdeckbezug 5 in nicht näher dargestellter Weise verbunden ist.

Zur Herstellung einer derartigen flexiblen Sichtscheibe wird aus optischen und mechanischen Gründen eine transparente, etwa 1 mm dicke Folie aus Weich-PVC verwendet, wobei der Weichmacheranteil ca. 30 % beträgt. Als Weichmacher werden ausschließlich äußere Weichmacher eingesetzt.

Zur Verbesserung der Kratzfestigkeit der flexiblen Sichtscheibe wird diese zumindest auf einer Seite 6 (in der Regel die stärker belastete Außenseite) mit einer Deckschicht 7 aus einem vorzugsweise hochelastisch eingestellten 2K-Klarlack auf Basis von PUR-Acrylat oder Polyester-Acryl versehen (Fig. 2). Es besteht aber auch die Möglichkeit, auf beiden Seiten 6, 8 der Sichtscheibe 4 eine Deckschicht 7 aufzubringen, wobei die Deckschichten 7 entweder zugleich oder nacheinander aufgebracht werden (Fig. 3). Vorteilhaft ist ferner, wenn die oben genannten 2K-Klarlacke Selbstheileigenschaften aufweisen.

Versuche haben gezeigt, daß bei einem hochelastisch eingestellten (Reißdehnung etwa 100 ± 20 %) 2K-Klarlack die Kratzfestigkeit wesentlich höher liegt als bei einer harten Lackeinstellung. Die Deckschicht 7 weist eine Dicke von 20 bis 40 μ auf und kann entweder durch Spritzlackieren, Tauchen, Gießen, Aufpressen, Bedrucken oder durch eine Kombination von Spritzlackieren und Aufpressen aufgebracht werden. Eine gute Lackhaftung auf der Weich-PVC-Folie wird insbesondere dann erreicht, wenn als Weichmacher entweder Di-2-ethylhexyphthalat oder eine Mischung aus Di-2-ethylhexyphthalat und Alkyl-Sulfonsäure-Phenyl-Ester (z. B. Mesamoll) verwendet wird. Die Weich-PVC-Folie kann jedoch auch andere Weichmacher enthalten.

Nachfolgend aufgeführte und in einer Tabelle näher spezifizierte Lacke eignen sich unter anderem als Deckschicht 7 für die flexible Sichtscheibe 4.

Lack Nr. 1: Glassodur-Yweikomponenten-Klarlack auf PUR-Acryl-Basis;
Lack Nr. 2: BASF-Zweikomponenten-Klarlack für Kunststoffe auf Polyester-Acrylat-Basis;
Lack Nr. 3: Bayer-Zweikomponenten-DD-Selfhealing-Lacksystem (hochelastische Einstellung);
Lack Nr. 4: Bayer-Zweikomponenten-DD-Lacksystem (mittelelastische Einstellung);
Lack Nr. 5: Bayer-Zweikomponenten-DD-Lacksystem;
Lack Nr. 6: Herberts-Zweikomponenten-Klarlack auf PUR-Acryl-Basis.

| Lack Nr. | 1 | 2 | 3 | 4 | 5 | 6 |
|---|---|---|---|---|---|---|
| Festkörper | 42 | 55,5 | 58 | 58 | 58 | 40 |
| Spez. Gew. (b. 20°C) | 0,979 | 1,016 | 0,989 | 0,989 | 0,989 | 1,009 |
| Verarbeitungs-konsistenz (sec) | 44 ISO 4 | 15–18 DIN 4 | 15–18 DIN 4 | 15–20 DIN 4 | 15–20 DIN 4 | 15–18 DIN 4 |
| Verdünnungs-zugabe (%) | 25 | 17 | 20 | 20 | 20 | 18 |
| Klarlack | AF 23–0103 | LK 73–0403 | | | | 479519 99 |
| Härter | SC 29–0113 | SC 29–0113 | | | | 9324 6 99 |
| Verdünnung | SV 41–0318 | SV 13–0315 | | | | 11694 99 |
| Mischungsbez. | | | COWO 546/1 | COWO 546/1 | COWO 546/3 | |
| Mischungsver-hältnis | 100:25:25 | 100:35:50 | | | | 100:25:25 |
| Topfzeit (h) | 8 | 8 | 8 | 8 | 8 | 8 |
| Düse (mm) | 1,2 | 1,2 | 1,2 | 1,2 | 1,2 | 1,2 |
| Spritzdruck (bar) | 3,5–4,0 | 3,5–4,0 | 3,5–4,0 | 3,5–4,0 | 3,5–4,0 | 3,5–4,0 |
| Schichtdicke (µm) | 30–40 | 30–40 | 30–40 | 30–40 | 30–40 | 30–40 |
| Aushärtungs-temp. (°C) | 80 | 80 | 60 | 60 | 60 | 50 |
| Aushärtungs-dauer (min.) | 30 | 40 | 120 | 120 | 120 | 240 |

Zur Hestellung derartiger, in Bezug auf die Kratzfestigkeit wesentlich verbesserter, flexibler Sichtscheiben 4 wird ein Verfahren mit folgenden Verfahrensschritten angewendet:

a) Entfetten der Sichtscheibe 4 mit einem Lösungsmittel. Hierzu werden eine oder beide Seiten der Sichtscheibe z. B. mit Isopropanol behandelt;
b) Aufbringen der Deckschicht 7 aus einem 2K-Klarlack auf Basis von PUR-Acrylat oder Polyester-Acryl durch Spritzlackieren, Tauchen, Gießen, Aufpressen oder dergleichen,
c) Ablüften der Deckschicht bzw. der Deckschichten;
d) Aushärten der Deckschicht unmittelbar auf der PVC-P-Folie bei Raumtemperatur und/oder wärmeforciert in einem Umluftofen.

Beim Spritzlackieren bzw. den anderen Applikationsverfahren sind die Verarbeitungsvorschriften der Lackhersteller zu beachten.
Eine weitere Möglichkeit des Lackauftragens besteht darin, die Folie in eine vorgewärmte Form (ca. 80°C) zu legen und den Lack (lösungsmittelfreies Lacksystem) mit etwa 40 bar Preßdruck zu beaufschlagen, wonach die Deckschicht unmittelbar auf der Folie ausgehärtet wird (Aushärtezeit ca. 15 Minuten).
Ferner kann der Lack aufgespritzt und nachträglich aufgepreßt werden.
Die Aushärtung erfolgt entweder bei Raumtemperatur und/oder wärmeforciert in einem Umluftofen. Je nach verwendetem Lacksystem beträgt die Aushärtezeit zwischen 30 und 240 Minuten, wobei die Aushärtetemperatur zwischen 50° und 80°C liegt. Die genauen Temperaturen und Aushärtezeiten für jeden Lack sind der obenstehenden Tabelle zu entnehmen.

Die besten Ergebnisse hinsichtlich der Kratzfestigkeit wurden mit einer flexiblen Sichtscheibe 4 erzielt, die als Weichmacher eine Mischung aus Di-2-ethylhexyphthalat (DOP) und Alkyl-Sulfonsäure-Phenyl-Ester (Mesamoll) enthält, wobei auf diese Sichtscheibe 4 der Lack Nr. 2 (hochelastisch eingestellter 2k-Klarlack auf Basis von Polyester-Acrylat) aufgebracht wird. Durch diese Kombination wird die Kratzfestigkeit etwa um den Faktor 100 gegenüber einer unlackierten Sichtscheibe 4 verbessert.

## Patentansprüche

1. Flexible Sichtscheibe (4) aus Kunststoff, insbesondere zusammenfaltbare Heckscheibe für ein Verdeck eines Personenwagens (1), die aus einer Folie aus transparentem Weich-PVC besteht, dadurch gekennzeichnet, daß die flexible Sichtscheibe (4) zumindest auf einer Seite (6, 8) mit einer Deckschicht (7) aus einem elastisch eingestellten 2K-Klarlack auf Basis von PUR-Acrylat oder Polyester-Acryl versehen ist.

2. Flexible Sichtscheibe (4) nach Anspruch 1, dadurch gekennzeichnet, daß der 2K-Klarlack vorzugsweise hochelastisch eingestellt ist (Reißdehnung ca. 100 +/- 20 %).

3. Flexible Sichtscheibe (4) nach den Ansprüchen 1 und 2, dadurch gekennzeichnet, daß der 2K-Klarlack Selbstheileigenschaften aufweist.

4. Flexible Sichtscheibe (4) nach Anspruch 1, dadurch gekennzeichnet, daß die Deckschicht (7) eine Dicke von 20 - 40 μ aufweist.

5. Flexible Sichtscheibe (4) nach den Ansprüchen 1 und 2, dadurch gekennzeichnet, daß die Deckschicht (7) auf eine flexible Sichtscheibe (4) aufgetragen ist, bei der als Weichmacher in an sich bekannter Weise Di-2-ethylhexylphthalat (DOP) verwendet wird.

6. Flexible Sichtscheibe (4) nach den Ansprüchen 1 und 2, dadurch gekennzeichnet, daß die Deckschicht (7) auf eine flexible Sichtscheibe (4) aufgetragen ist, die als Weichmacher in an sich bekannter Weise eine Mischung aus Di-2-ethylhexyphtalat (DOP) und Alkyl-Sulfonsäure-Phenyl-Ester (z. B. Mesamoll) umfaßt.

7. Flexible Sichtscheibe (4) nach Anspruch 1, dadurch gekennzeichnet, daß die Deckschicht (7) eine Spritzlackierung ist.

8. Flexible Sichtscheibe (4) nach Anspruch 1, dadurch gekennzeichnet, daß die Deckschicht (7) auf die PVC-Folie aufgepreßt ist.

9. Flexible Sichtscheibe (4) nach Anspruch 1, dadurch gekennzeichnet, daß die Deckschicht (7) in einem Tauchbad aufgetragen wird.

10. Verfahren zur Optimierung der Kratzfestigkeit einer flexiblen Sichtscheibe (4) aus Kunststoff, gekennzeichnet durch folgende Verfahrensschritte:
a) Entfetten der Sichtscheibe (4), die aus einer Folie aus transparentem Weich-PVC besteht, mit einem Lösungsmittel (z.B. Isopropanol);
b) Aufbringen der Deckschicht (7) aus einem 2K-Klarlack auf Basis von PUR-Acrylat oder Polyester-Acryl durch Spritzlackieren, Tauchen, Aufpressen, Bedrucken, Gießen oder dergleichen;
c) Ablüften der Deckschicht (7) bzw. der Deckschichten (7);
d) Aushärten der Deckschicht (7) unmittelbar auf der PVC-P-Folie bei Raumtemperatur und/oder wärmeforciert in einem Umluftofen.

11. Verfahren nach Anspruch 10, dadurch gekennzeichnet, daß das Spritzlackieren oder die anderen Applikationsverfahren entsprechend den Verarbeitungsvorschriften der Lackhersteller erfolgt.

12. Verfahren nach Anspruch 10, dadurch gekennzeichnet, daß der 2K-Klarlack ohne Verdünnung angemischt und auf die Sichtscheibe (4) aufgespritzt wird, wonach die Sichtscheibe (4) in eine vorgewärmte, hochglanzpolierte Form eingelegt und mit einem Preßdruck von etwa 40 bar beaufschlagt wird und daß anschließend die Aushärtung der Deckschicht 7 erfolgt.

## Claims

1. A flexible window (4) of plastics material, in particular a collapsible rear window for a hood of a passenger vehicle (1), which comprises a film of transparent soft PVC, characterized in that the flexible window (4) is provided at least on one side (6, 8) with a covering layer (7) of a resiliently set 2K clear lacquer based on PUR acrylate or polyester acryl.

2. A flexible window (4) according to claim 1, characterized in that the 2K clear lacquer is preferably set to be highly resilient (breaking elongation approximately 100 ± 20%).

3. A flexible window (4) according to claims 1 and 2, characterized in that the 2K clear lacquer has selfhealing properties.

4. A flexible window (4) according to claim 1, characterized in that the covering layer (7) has a thickness of 20 to 40 μ.

5. A flexible window (4) according to claims 1 and 2, characterized in that the covering layer (7) is applied to a flexible window (4) in which di-2-ethylhexylphthalate [sic] (DOP) is used in a manner known per se as a plasticizer.

4

6. A flexible window (4) according to claims 1 and 2, characterized in that the covering layer (7) is applied to a flexible window (4) which comprises a mixture of di-2-ethylhexyphthalate (DOP) and alkyl sulphonic acid phenyl esters (e.g. mesamoll) in a manner known per se as plasticizers.

7. A flexible window (4) according to claim 1, characterized in that the covering layer (7) is a spray lacquer.

8. A flexible window (4) according to claim 1, characterized in that the covering layer (7) is pressed onto the PVC film.

9. A flexible window (4) according to claim 1, characterized in that the covering layer (7) is applied in an immersion bath.

10. A method of optimizing the scratch resistance of a flexible window (4) of plastics material, characterized by the following method steps:

a) removing grease from the window (4), which comprises a film of transparent soft PVC, with a solvent (e.g. isopropanol);

b) applying the covering layer (7) of a 2K clear lacquer based on PUR acrylate or polyester acryl by spray lacquering, immersion, pressing-on, printing, casting or the like;

c) aerating the covering layer or layers (7);

d) age-hardening the covering layer (7) directly on the PVC-P-film at room temperature and/or heat-forced in a forced-air oven.

11. A method according to claim 10, characterized in that the spray lacquering or the other application methods takes or take place in accordance with the processing requirements of the lacquer manufacturer.

12. A method according to claim 10, characterized in that the 2K clear lacquer is mixed without dilution and is sprayed onto the window (4), after which the window (4) is inserted into a pre-heated, highly polished mould and is subjected to an applied pressure of approximately 40 bar, and the agehardening of the covering layer (7) subsequently takes place.

## Revendications

1. Vitre flexible (4) en matière plastique, en particulier lunette arrière pliable pour une capote de voiture automobile (1), constituée par une feuille de CPV plastifié, caractérisée par le fait que sur au moins une de ses faces (6, 8) ladite vitre flexible (4) est pourvue d'une couche de protection (7) constituée par une laque transparente à deux composants, à base d'acrylate de polyuréthane ou d'acrylate de polyester ajustée à un certain degré d'élasticité.

2. Vitre flexible (4) selon la revendication 1, caractérisée par le fait que la laque transparente à deux composant est ajustée de préférence à un degré d'élasticité élevé (élongation à la rupture de l'ordre de 80 à 120 pour cent).

3. Vitre flexible (4) selon les revendications 1 et 2, caractérisée par le fait que la laque transparente à deux composants présente des caractéristiques d'autorégénération.

4. Vitre flexible (4) selon la revendication 1, caractérisée par le fait que la couche de protection (7) a une épaisseur de 20 à 40 µm.

5. Vitre flexible (4) selon les revendications 1 et 2, caractérisée par le fait que la couche de protection (7) est appliquée sur une vitre flexible (4) pour laquelle on utilise comme plastifiant, de la manière connue en soi, du Di-2-éthylhexylphthalate (DOP).

6. Vitre flexible (4) selon les revendications 1 et 2, caractérisée par le fait que la couche de protection (7) est appliquée sur une vitre flexible (4) pour laquelle on utilise comme plastifiant, de la manière connue, un mélange de Di-2-éthylhexylphthalate (DOP) et de Phenil-Ester d'acide alkyl-sulfonique (de Mesamoll par ex.).

7. Vitre flexible (4) selon la revendication 1, caractérisée par le fait que la couche de protection (7) est obtenue par laquage au pistolet.

8. Vitre flexible (4) selon la revendication 1, caractérisée par le fait que la couche de protection (7) est appliquée par pressage sur la feuille de CPV.

9. Vitre flexible (4) selon la revendication 1, caractérisée par le fait que la couche de protection (7) est appliquée dans un bain de trempage.

10. Procédé pour l'optimisation de la résistance à l'abrasion d'une vitre flexible (4) en matière plastique, caractérisé par la succession d'opérations ci-dessous:

a) Dégraissage de la vitre (4) qui est constituée par une feuille de CPV plastifié transparent, au moyen d'un solvant, par exemple de l'alcool isopropylique;

b) Application de la couche de protection (7) consituée par une laque transparente à deux composants à base d'acrylate de polyuréthane ou d'acrylate de polyester par pulvérisation au pistolet, par trempage, par pressage ou, par quelques autres moyens analogues;

c) décontamination par soufflage de la couche ou des deux couches de protection (7);

d) Durcissement de la couche de protection (7) directement sur la feuille de CPV plastifié à la température ambiante et/ou accéléré par la chaleur dans un four à circulation d'air.

11. Procédé selon la revendication 10, caractérisé par le fait que le laquage au pistolet ou par quelque autre méthode d'application s'effectue conformément aux indications données par le fabricant de la laque.

12. Procédé selon la revendication 10, caractérisé par le fait que le mélange de la laque transparente à deux composants s'effectue sans adjonction de diluant et qu'il est projeté au pistolet sur la vitre (4), après quoi ladite vitre (4) est disposée dans un moule «poli miroir», préchauffé, où on lui applique une pression de 40 bars et où s'effectue ensuite le durcissement de la couche de protection (7).

FIG.1

FIG.2

FIG.3